# EUROPÄISCHE PATENTSCHRIFT

(11) **EP 1 845 598 B1**
(45) Veröffentlichungstag und Bekanntmachung des Hinweises auf die Patenterteilung: **02.12.2020**
(21) Anmeldenummer: 07090021.2
(22) Anmeldetag: 14.02.2007
(51) Int. Cl.: H02G 3/38

(54) **Bauwerk mit einem Unterflur-Bodenkanal**
Structure with underfloor duct
Structure avec conduit sous plancher

(30) Priorität: 12.04.2006 DE 202006006132 U
(43) Veröffentlichungstag der Anmeldung: 17.10.2007
(73) Patentinhaber: PUK-Werke KG Kunststoff-Stahlverarbeitung GmbH & Co., 12057 Berlin (DE)
(72) Erfinder: Jeschke, Frank, 12623 Berlin (DE); Hippel, Stephan, 12249 Berlin (DE)
(74) Vertreter: Jungblut, Bernhard Jakob

(56) Entgegenhaltungen:
- DE-U- 7 442 158
- DE-U1- 20 018 442
- US-A- 3 074 208
- US-A- 4 040 755

## Beschreibung

### Gebiet der Erfindung.

Die Erfindung betrifft ein Bauwerk mit einem Unterflur-Bodenkanal.

Hintergrund der Erfindung und Stand der Technik.

Aus der Praxis ist es bekannt, einen Unterflur-Bodenkanal dadurch herzustellen, dass auf einer horizontalen Tragfläche eines Bauwerkes zunächst Schalungen angeordnet werden, welche die Begrenzungen des Kanals bilden. Außenseitig der Schalungen wird dann beispielsweise ein Estrich verfüllt. Nach der Aushärtung des Estrichs werden die Schalungen entfernt und der entstandene Bodenkanal wird mittels der Kanalabdeckung abgedeckt.

Die insofern bekannte Verfahrensweise zur Erstellung eines Unterflur-Bodenkanals ist aufwändig und teuer. Zudem ist eine Koordination verschiedener Gewerke erforderlich. Schließlich ist es insbesondere im Falle von schweren Lasten, die über den Unterflur-Bodenkanal bewegt werden sollen, erforderlich, Stütz- und Aussteifungskomponenten im Rahmen des Unterflur-Bodenkanals einzubringen.

Des Weiteren ist es aus der Praxis bekannt, einen Unterflur-Bodenkanal mit einem U-förmigen Kanalwannenbauelement über Füße auf einer Tragfläche eines Bauwerkes aufzusetzen und mit Hilfe der Füße zu nivellieren. Die Füße können an dem Kanalwannenbauelement selbst oder an Haltewinkeln, welche an den Enden der Schenkel des Kanalwannenbauelementes abgebracht sind, befestigt sein. Der insofern bekannte Unterflur-Bodenkanal ist in statischer Hinsicht verbesserbar, da der Einsatz von Füßen zu einer eher punktförmigen Belastung bei Beaufschlagung des Kanals mit einer Schwerlast führt. Insbesondere auch die Befestigungspunkte der Füße an dem Kanalwannenbauelement und/oder den Haltewinkeln müssen entsprechend stabil ausgebildet sein. Zudem ist die Einstellung jedes einzelnen der Füße zum Zwecke der Nivellierung umständlich und langwierig.
Verschiedene Bauweisen von Unterflur-Bodenkanälen entsprechend der vorstehend beschrieben praxisbekannten Ausführungsformen sind bekannt aus den Literaturstellen US 3,074,208, DE 200 18 442 U1, DE-G-7442158 und US 4,040,755.

Technisches Problem der Erfindung.

Der Erfindung liegt daher das technische Problem zu Grunde, einen Unterflur-Bodenkanal für ein Bauwerk anzugeben, welcher einfach herstellbar und zugleich in Hinblick auf die Belastbarkeit, insbesondere der Lasteinleitung von Schwerlasten in den Boden, verbessert ist.

Grundzüge der Erfindung und bevorzugte Ausführungsformen.

Zur Lösung dieses technischen Problems lehrt die Erfindung den Gegenstand des Anspruchs 1.

Hierbei bezeichnet der Begriff der Tragwinkel, dass die Tragwinkel mit der Maßgabe dimensioniert sind, dass die Last einer Schwerlast überwiegend über die Tragwinkel in einen Estrich und folglich auf einen Boden übertragen wird. Gegenüber dem Stand der Technik mit Einsatz von Füßen erfolgt nicht eine vertikale Lastverteilung, sondern eine im Wesentlichen horizontale Lastverteilung.

Ein erfindungsgemäß eingesetzter Unterflur-Bodenkanal ist insbesondere frei von Füßen und folglich entfällt auch deren Montage und Einstellung. Ein erfindungsgemäß eingesetzter Unterflur-Bodenkanal lässt sich ohne weiteres auf einer Tragfläche eines Bauelementes anordnen. Wird nun außerhalb des Kanalwannenbauelementes, mit montieren Tragwinkeln, beispielsweise ein Estrich aufgebracht, so fließt der Estrich die Außenwandungen des Kanals an und bettet diesen ein. Durch die Tragwinkel wird eine auf die Kanalabdeckung aufgebrachte Schwerlast vom Tragwinkel aufgenommen und flächig auf den (ausgehärteten) Estrich verteilt. Insofern wird nicht nur eine einfache Montierbarkeit, sondern es werden auch eine besonders hohe Stabilität und Tragfähigkeit erreicht. Mit den folgenden Dimensionierungen, z.B. Kanalbreite (innen) von 100 bis 500 mm, insbesondere 200 bis 400 mm, Kanalhöhe (Boden bis Unterseite Kanalabdeckung) von 80 bis 300 mm, insbesondere 100 bis 200 mm, werden mit Kanalabdeckungen aus Stahl einer Dicke zwischen 5 und 10 mm Traglasten zwischen 5 und 25 kN erzielt. Es handelt sich also um einen Schwerlastkanal.

Durch die variable Einstellung der Höhe der Tragwinkel, bezogen auf das Kanalwannenbauelement, kann leicht eine Anpassung an eine vorgegebene Höhe des Bodenwerkstoffes, beispielsweise des Estrichs erfolgen, und zwar mit der Maßgabe, dass die Oberseite der Kanalabdeckung an den ausgehärteten Bodenwerkstoff bündig anschließt.

Die Befestigungselemente können Niete oder Schraubverbindungen umfassen. Die Montageausnehmung in dem U-Schenkel des Kanalwannenbauelements ist vorzugsweise als Schlitz ausgebildet, welcher zum Ende des U-Schenkels hin offen ist. Bei dieser Ausführungsform der Erfindung ist es auch möglich, eine Anpassung an nicht exakt horizontale Tragflächen eines Bauwerkes durchzuführen, so dass die Kanalabdeckung und auch der Bodenwerkstoff exakt horizontal anordbar sind. Alternativ können vorgegebene Neigungen der Kanalabdeckung sowie des Bodenwerkstoffes eingerichtet werden.

Die Tragwinkel können sich in Richtung nach außen von den U-Schenkeln erstreckende Bodenanker aufweisen, welche in einen fließfahigen und aushärtbaren Bodenwerkstoff einbettbar sind. Hierdurch wird eine besonders stabile Verankerung der Tragwinkel und folglich auch der Schenkel des U-förmigen Kanalwannenbauelementes in dem Bodenwerkstoff erreicht. Jegliche Stütz- und Aussteifungskomponenten, insbesondere Füße, werden entbehrlich.

Vorzugsweise sind das Kanalwannenbauelement und/oder die Kanalabdeckung aus einem metallischen Werkstoff, insbesondere Stahl, vorzugsweise verzinktem Stahl, gebildet, beispielsweise aus Blech. Die Tragwinkel können aus dem gleichen Werkstoff und als Blech oder Strangprofil gebildet sein. Neben Stahl ist insbesondere auch eine Aluminiumlegierung geeignet, sofern die Kanalabdeckung so dimensioniert ist, dass die benötigte Last getragen wird.

In einer bevorzugten Weiterbildung der Erfindung weist die Tragfläche des Tragwinkels außenseitig, bezogen auf das Kanalwannenbauelement, ein Führungselement mit im wesentlichen vertikaler Führungsfläche für die Seiten der Kanalabdeckung auf. Das Führungselement weist vorzugsweise eine Höhe auf, welcher der Dicke der Kanalabdeckung entspricht. Hierdurch wird ein bündiger Abschluss zwischen Kanalabdeckung, Führungselement und Bodenwerkstoff erreicht.

Die Erfindung betrifft also im Kern ein Bauwerk mit einem vorstehend beschriebenen Unterflur-Bodenkanal, wobei das Kanalwannenbauelement auf einer horizontalen Tragfläche des Bauwerkes (unmittelbar bzw. ohne Einsatz von Füßen) aufgesetzt ist, wobei auf die Tragfläche ein fließfähiger und ausgehärteter Bodenwerkstoff außenseitig des Innenraumes des Kanalwannenbauelementes auf die Tragfläche aufgebracht ist, und wobei die Oberfläche des Bodenwerkstoffes bündig mit der Oberseite des Unterflur-Bodenkanals, insbesondere des Führungselementes, abschließt. Die Bodenanker der Tragwinkel sind in den Bodenwerkstoff eingebettet.

Im Folgenden wird die Erfindung anhand von lediglich ein Ausführungsbeispiel darstellenden Figuren erläutert. Es zeigen:
- Fig. 1:: eine Querschnittzeichnung eines erfindungsgemäß eingesetzten Unterflur-Bodenkanals
- Fig. 2:: eine Seitenansicht des Gegenstandes der Figur 1 im demontierten Zustand.

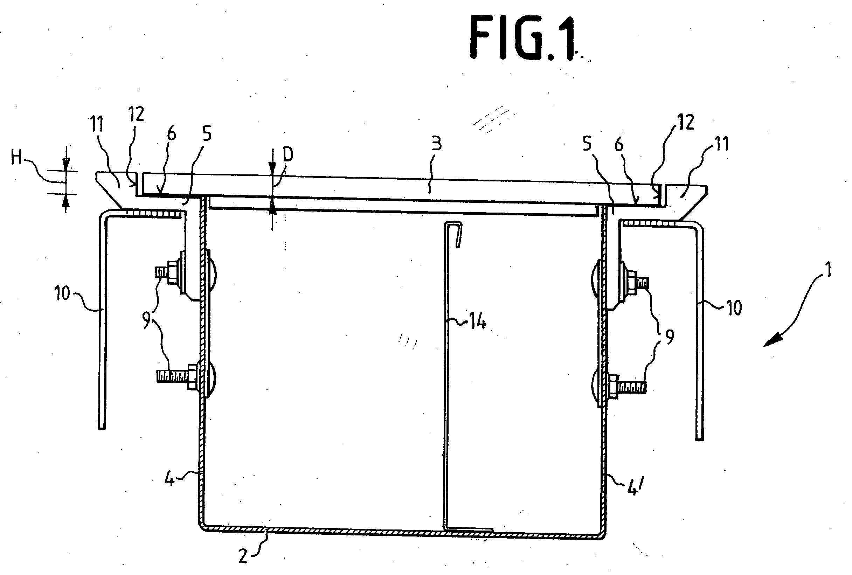

In der Figur 1 erkennt man einen Querschnitt durch einen erfindungsgemäß eingesetzten Unterflur-Bodenkanal 1 mit einem im Querschnitt im Wesentlichen U-förmigen Kanalwannenbauelement 2 und einer auf das Kanalwannenbauelement 2 aufsetzbaren Kanalabdeckung 3, wobei an den U-Schenkeln 4,4'des Kanalwannenbauelementes 2 jeweils nach außen gewandte, im Wesentlichen L-förmige Tragwinkel 5 angebracht sind, welche an ihrer Oberseite Tragflächen 6 für die Kanalabdeckung 3 aufweisen. Die Tragwinkel 5 und das Kanalwannenbauelement 2 weisen zueinander komplementäre Befestigungsmittel auf, die eine Befestigung der Tragwinkel 5 in einer vorgegebenen und variablen Höhe, bezogen auf den Boden des Kanalwannenbauelementes 2, erlauben.

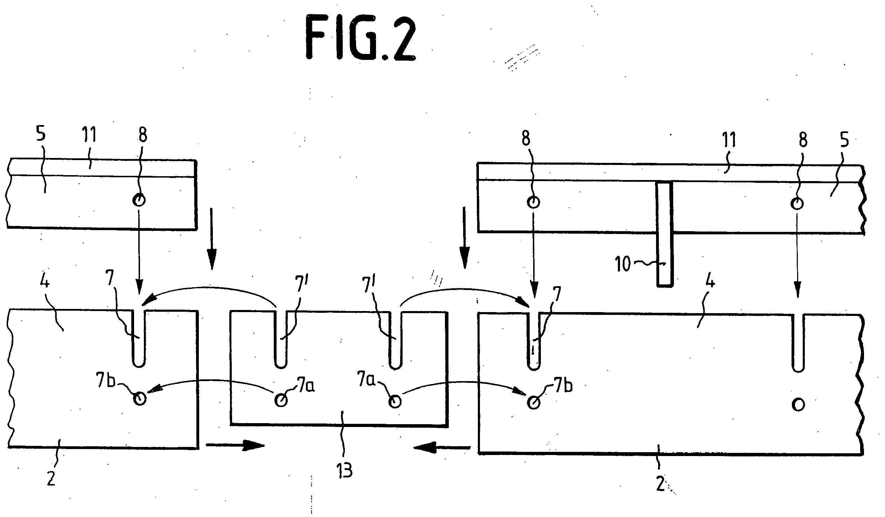

Aus einer vergleichenden Betrachtung der Figuren 1 und 2 erkennt man, dass die Befestigungsmittel durch miteinander fluchtende Montageausnehmungen 7,8 in den U-Schenkeln 4,4' des Kanalwannenbauelementes 2 und in den Tragwinkeln 5, sowie die Montageausnehmungen 7,8 durchgreifende Befestigungselemente 9 gebildet sind. Die Montageausnehmungen 7 in den U-Schenkeln 4,4' des Kanalwannenbauelements 2 sind als Schlitze ausgebildet, welche zu den Enden der U-Schenkel 4,4' hin offen sind. Die Schlitze erstrecken sich in Richtungen orthogonal zur Längserstreckung des Kanalwannenbauelementes 2.

Insbesondere der Figur 1 ist entnehmbar, dass die Tragwinkel 5 sich in Richtung nach außen von den U-Schenkeln 4,4' erstreckende Bodenanker 10 aufweisen, welche in einen fließfahigen und aushärtbaren Bodenwerkstoff einbettbar sind.

Das Kanalwannenbauelement 2 und die Kanalabdeckung 3 sind aus verzinktem Stahl gebildet. Bei den Tragwinkeln 5 handelt es sich um verzinkte Stahlprofile.

Insbesondere der Figur 1 ist entnehmbar, dass die Tragflächen 6 der Tragwinkel 5 außenseitig, bezogen auf den Innenraum des Kanalwannenbauelementes 2, jeweils einander gegenüberliegende Führungselemente 11 mit im wesentlichen vertikaler Führungsfläche 12 für die Kanalabdeckung 3 aufweisen. Die Führungselemente 11 weisen eine Höhe H auf, welcher der Dicke D der Kanalabdeckung 3 entspricht. Der Abstand der einander gegenüberliegenden Führungsflächen 12 ist geringfügig größer, beispielsweise um 0,1 bis 5 mm, als die Breite der Kanalabdeckung 3.

Insbesondere der Figur 2 ist zu entnehmen, dass des Weiteren Verbindungsbauteile 13, beispielsweise Verbindungsbleche 13, vorgesehen sind, mit welchen verschiedene Kanalwannenbauelemente 2 miteinander aneinandergereiht verbindbar sind. Die Verbindungbauteile 13 übergreifen hierbei die Endbereiche der aneinander gereihten Kanalwannenbauelemente 2. Die Befestigung der Verbindungsbauteile 13 mit den aneinander gereihten Kanalwannenbauelementen 2 erfolgt mit den Befestigungselementen 9 (wozu ggf. die Verbindungsbauteile 13 Schlitze 7' aufweisen, die im montierten Zustand mit den Schlitzen 7 fluchten), oder separaten Befestigungselementen 9' (die Montageausnehmungen 7a und 7b im Verbindungsbauteil 13 und den Kanalwannenbauelementen 2 durchfassen), wozu auch auf die Figur 1 verwiesen wird.

Der Figur 1 ist des Weiteren zu entnehmen, dass auf dem Boden des Kanalwannenbauelementes 2 ein Trennsteg 14 befestigt sein kann, wodurch separate Kanalräume im Kanalwannenbauelement 2 eingerichtet sind. Die Befestigung kann beispielsweise durch Punktschweißen erfolgen.

## Patentansprüche

1. Bauwerk mit einem Unterflur-Bodenkanal (1), wobei der Unterflur-Bodenkanal (1) ein im Querschnitt im Wesentlichen U-förmiges Kanalwannenbauelement (2) und eine auf das Kanalwannenbauelement (2) aufsetzbare Kanalabdeckung (3) aufweist, wobei an den U-Schenkeln (4,4')des Kanalwannenbauelementes (2) jeweils nach außen gewandte, im Wesentlichen L-förmige Tragwinkel (5) angebracht sind, welche an ihrer Oberseite Tragflächen (6) für die Kanalabdeckung (3) aufweisen, wobei die Tragwinkel (5) und das Kanalwannenbauelement (2) zueinander komplementäre Befestigungsmittel aufweisen, die eine Befestigung der Tragwinkel (5) in einer vorgegebenen und variablen Höhe, bezogen auf den Boden des Kanalwannenbauelementes (2), erlauben, und wobei die Befestigungsmittel miteinander fluchtende Montageausnehmung (7,8) in einem U-Schenkel (4,4') des Kanalwannenbauelementes (2) und in dem Tragwinkel (5), sowie die Montageausnehmungen (7,8) durchgreifende Befestigungselemente (9) aufweisen, wobei zumindest eine der Montageausnehmungen (7,8) als Schlitz ausgebildet ist, welcher sich in Richtungen orthogonal zu Längserstreckung des Kanalwannenbauelementes (2) erstreckt, wobei das Kanalwannenbauelement (2) auf einer horizontalen Tragfläche des Bauwerkes aufgesetzt ist, wobei auf die Tragfläche ein fließfähiger und ausgehärteter Bodenwerkstoff aufgebracht ist, wobei der Bodenwerkstoff die Außenwandungen des Unterflur-Bodenkanals anfließt und diesen einbettet, und wobei die Oberfläche des Bodenwerkstoffes bündig mit der Oberseite des Unterflur-Bodenkanals (1) abschließt.

2. Bauwerk nach Anspruch 1, wobei die Oberfläche des Bodenwerkstoffes bündig mit der Oberseite des Führungselementes (11) abschließt und/oder wobei der Bodenanker (10) in den Bodenwerkstoff eingebettet ist.

## Claims

1. A building with an underfloor duct (1), the underfloor duct (1) comprising a duct bottom piece element (2) having an essentially U-shaped cross-section and a duct cover (3) to be fitted on the duct bottom piece element (2), wherein at the U arms (4, 4') of the duct bottom piece element (2), essentially L-shaped support brackets (5) each outwardly facing are arranged, which have, on their upper side, support surfaces (6) for the duct cover (3), wherein the support brackets (5) and the duct bottom piece element (2) comprise mutually complementary fixing means that permit a fixation of the support brackets (5) in a predetermined and variable height, in relation to the bottom of the duct bottom piece element (2), and wherein the fixing means comprise mounting recesses (7, 8) being flush with each other in one U arm (4, 4') of the duct bottom piece element (2) and in the support brackets (5), and fixing elements (9) passing through the mounting recesses (7, 8), wherein at least one of the mounting recesses (7, 8) is configured as a slot, which extends in a direction orthogonal to the longitudinal extension of the duct bottom piece element (2), wherein the duct bottom piece element (2) is fitted on a horizontal support surface of the building, wherein on the support surface, a flowable and cured bottom material is applied, wherein the bottom material flows on the outer walls of the underfloor bottom channel and embeds the latter, and wherein the surface of the bottom material is flush with the upper side of the underfloor duct (1).

2. The building according to claim 1, wherein the surface of the bottom material is flush with the upper side of the guide element (11) and/or wherein the bottom anchor (10) is embedded in the bottom material.

## Revendications

1. Bâtiment avec un canal sous chape (1), le canal sous chape (1) comprenant un élément de panier du canal (2) ayant une section transversale essentiellement en forme d'U et un volet du canal (3) pouvant être fixé sur l'élément de panier du canal (2), dans lequel aux ailes en U (4, 4') de l'élément de panier du canal (2), des supports équerres (5) essentiellement en forme de L chacune tournées vers l'extérieur sont montées, qui ont, sur leur surface supérieure, des surfaces de support (6) pour le volet du canal (3), dans lequel les supports équerres (5) et l'élément de panier du canal (2) comprennent des moyens de fixation complémentaires l'un par rapport à l'autre qui permettent une fixation des supports équerres (5) à une hauteur prédéterminée et variable, par rapport au fond de l'élément de panier du canal (2), et dans lequel les moyens de fixation comprennent des évidements de montage (7, 8) étant en affleurement l'un avec l'autre dans un aile en U (4, 4') de l'élément de panier du canal (2) et dans les supports équerres (5), et des éléments de fixation (9) traversant les évidements de montage (7, 8), dans lequel au moins un des évidements de montage (7, 8) est configuré de façon de fente, qui s'étend dans une direction orthogonale à l'étendue longitudinale de l'élément de panier du canal (2), dans lequel l'élément de panier du canal (2) est monté sur une surface de support horizontale du bâtiment, dans lequel sur la surface de support, un matériau de fond coulable et durci est appliqué, dans lequel le matériau de fond s'écoule sur les parois extérieure du canal de fond sous chape et vient encastrer celui-ci, et dans lequel la surface du matériau de fond est en affleurement avec la surface supérieure du canal sous chape (1).

2. Bâtiment selon la revendication 1, dans lequel la surface du matériau de fond est en affleurement avec la surface supérieure de l'élément de guidage (11) et/ou dans lequel l'ancre de fond (10) est encastrée dans le matériau de fond.
